# EUROPEAN PATENT SPECIFICATION

(11) **EP 2 366 531 B1**
(45) Date of publication and mention of the grant of the patent: **30.09.2015**
(21) Application number: 09764542.8
(22) Date of filing: 11.11.2009
(51) Int. Cl.: B29C 65/02, B65D 33/38

(54) **PROCESS AND CLAMP FOR THE HEAT WELD SEALING OF THE END EDGES OF TWO SIDE WALLS OF A FLEXIBLE CONTAINER PACK TO A SUPPORT BODY OF A SPOUT**
VERFAHREN UND KLEMME ZUM VERSIEGELN DURCH WÄRMESCHWEISSEN DER ENDRÄNDER VON ZWEI SEITENWÄNDEN EINES FLEXIBLEN VERPACKUNGSBEHÄLTERS MIT EINEM TRÄGERKÖRPER EINER GIESSTÜLLE
PROCÉDÉ ET MÂCHOIRE POUR LE SCELLAGE PAR THERMOSOUDURE DES BORDS TERMINAUX DE DEUX PAROIS LATÉRALES D'UN EMBALLAGE SOUPLE SUR UN CORPS DE SUPPORT D'UNE EMBOUCHURE

(30) Priority: 18.11.2008 ES 200803339
(43) Date of publication of application: 21.09.2011
(73) Proprietor: Volpak, S.A.U., 08130 Santa Perpetua De Mogoda (ES)
(72) Inventor: FIGOLS GAMIZ, Ramón, E-08130 Santa Perpetua de Mogoda (ES)
(74) Representative: Sugrañes Patentes y Marcas
(86) International application number: PCT/ES2009/070495
(87) International publication number: WO 2010/058051

(56) References cited:
- WO-A1-00/43189
- WO-A1-2005/042232
- DE-A1-102006 004 611
- FR-A1- 2 273 720
- FR-A1- 2 915 399

## Description

### Technical Field of the Invention

The invention relates to a process for the heat weld sealing of the end edges of two side walls of a flexible container pack to a support body of a spout interposed between the mentioned side walls, the support being of the type provided with two opposing, convex, flexible sealing surfaces with a general arch shape, and the process comprising, in a conventional manner, the operation of applying under pressure each of the side walls of the pack against a respective sealing surface of the support body of the spout exerting pressure by means of the operative surface of a corresponding clamp on the side walls of the pack, and of supplying heat to cause the bonding of the mentioned side walls and the sealing surfaces by melting the materials that form them.

### Background of the Invention

The use of flexible pouches or containers particularly suitable for containing food products, among which includes those with a fluid or non-solid consistency, is increasing due to their lower manufacturing costs and to their enormous versatility. One type of these containers is the one formed by a flexible pouch or container provided with a spout in an opening of the container, the feeding and/or delivery of the contents into/from the pack being provided through said spout.

Said spouts generally comprise a tubular body which forms a passage for the feeding or delivery of the product contained in the pouch, provided close to its mouth with fastening means, generally threading, for coupling a cap and thus closing the spout at its free end. The spout comprises at its opposite end a support body intended for being interposed between the end upper edges of the side walls of the pack or pouch and bonded in a leak-tight manner to said side walls through respective sealing surfaces.

Bonding the support body and sealing the spout with the foil walls of the pack is a delicate operation, especially when the sealing surfaces of the support body are smooth and flexible. The sealing must assure perfect leak-tightness to prevent the contained product from accidentally coming out, as well as for preventing external substances that may alter the condition of the contained product from getting in. An especially advantageous bonding method due to its simplicity and efficiency is heat welding. Heat weld bonding consists of increasing the coalescence between the materials to be bonded by heating them with the aid of a hot body until at least one of the materials reaches its melting temperature. Generally the material of the walls of the pack melt before the support body of the spout, and when heat is no longer applied to the melted material, the latter cools down and thus recovers its initial solid state, but being fully adhered to the parts in contact with the support body. For heat weld bonding the side walls of the pack to the support body of the spout, said foil walls are applied under pressure against the sealing surfaces of the support body by means of a hot body, usually a clamp specially designed in accordance with the contour of the sealing walls.

Nevertheless, the results of the heat weld bonding are not always satisfactory and the bonding has irregularities in the sealing. Said irregularities can be the consequence of the fact that the walls in which the sealing surfaces are formed bend towards the spout when the clamps exert pressure thereon during the sealing operation. To prevent this drawback, there are specific designs for the walls of the support body of the spout which prevent to the greatest extent possible the mentioned deformations. This is the case of the spout described, for example, in patent document WO03031280.

Nevertheless, it has been demonstrated that some containers in which support bodies for the spouts such as those described in document WO03031280 are used continue to present some irregularities. Specifically, there are areas in which the foils of the pack are not correctly adhered to the outer surfaces of the sealing walls, which in addition to transmitting the appearance of a poor finish and little care has a much more important effect: it does not meet the leak-tightness requirements.

Document WO 2005/042232 discloses a pair of jaws provided with linear portions that elastically deform a portion of the spout to provide to the spout with respective planar portions. These planar portions coincide with the critical transitional areas in which the outer surface of the plastic spout and the side walls of the pack meet.

Document FR 2915399 shows a jaw intended to enclose more than half of a spout having a circumferential cross-section.

An objective of the present invention is therefore a process, and the means for putting it into practice, which improves the quality of the sealing and is furthermore applicable for simpler support bodies, such as those having sealing surfaces in the form of an oval or semicylindrical arch or the like.

### Disclosure of the Invention

Unlike the proposals known to date, the applicant does not seek to solve the target technical problem by means of modifying the sealing surfaces of the support body of the spout, but rather he seeks to solve the problem by means of providing the clamp with an operative surface different from that of the sealing surfaces of the support body of the spout.

Essentially, the process according to the invention is characterized in that the operative surface of each of the clamps is formed by an arched concavity, its span being smaller than the span of the arch of the respective sealing surface, all such that each clamp simultaneously exerts pressure on the two ends of the arch of the corresponding sealing surface causing, due to the elastic reaction of the support body of the spout, a deformation in the sealing surface which causes a bulging effect, such as an increase of its height and a reduction of its span, such that the entire sealing surface contacts against the concavity of the operative surface of the clamp, with the interposition of the corresponding side wall of the pack.

With the process according to the invention, when the clamp acts on the sealing surface, its original shape is slightly modified, contacting with the concavity of the operative surface of the clamp. To that end, despite the fact that the shape of the contour of the concavity is different from that of the arch of the sealing surface, the length of the contour of the cross section of said concavity must be virtually the same as that of the arch of the sealing surface. If the length of the contour of the concavity is exceedingly greater than that of the arch of the sealing surface, the latter would not be applied under pressure in its entirety against the concavity of the operative surface of the clamp. In contrast, if the length of the contour of the concavity is less than that of the arch of the sealing surface, the latter would fold inwardly, giving rise to defective sealing.

According to another feature of the invention, the sealing surfaces are provided with a general semi-circular or round arch shape, and the curved concavity of the operative surfaces of the clamps is one of a general keyhole or horseshoe arch shape.

According to another variant of the invention, the sealing surfaces are provided with a general semi-circular or round arch shape, and the curved concavity of the operative surfaces of the clamps is of a general stilted arch shape, the height of which is greater than its half-span.

Preferably, the concavity of the operative surfaces of the clamps is a general arch shape the height of which is greater than the height of the arch of the sealing surface.

According to another aspect of the invention, a clamp for putting the process according to the invention into practice is disclosed which is especially suitable for sealing surfaces with a general semi-circular or round arch shape. The clamp is characterized in that it comprises an operative surface formed by a curved concavity with a general keyhole arch shape.

According to another variant, the clamp comprises an operative surface formed by a curved concavity with a general stilted arch shape, the height of which is greater than its half-span.

### Brief Description of the Drawings

The attached drawings show by way of non-limiting example the sequence of the process according to the invention and a variant of a clamp for putting the process according to the invention into practice. Specifically:
Figures 1 and 2 are respective schematic and elevational views of a set of clamps and of the assembly formed by the support body of the spout and the side walls of the pack to be produced before and during the intervention of the clamps; and
Figure 3 is a view of a variant for the operative surface of a clamp which differs from the variant depicted in Figures 1 and 2.

### Detailed Description of the Drawings

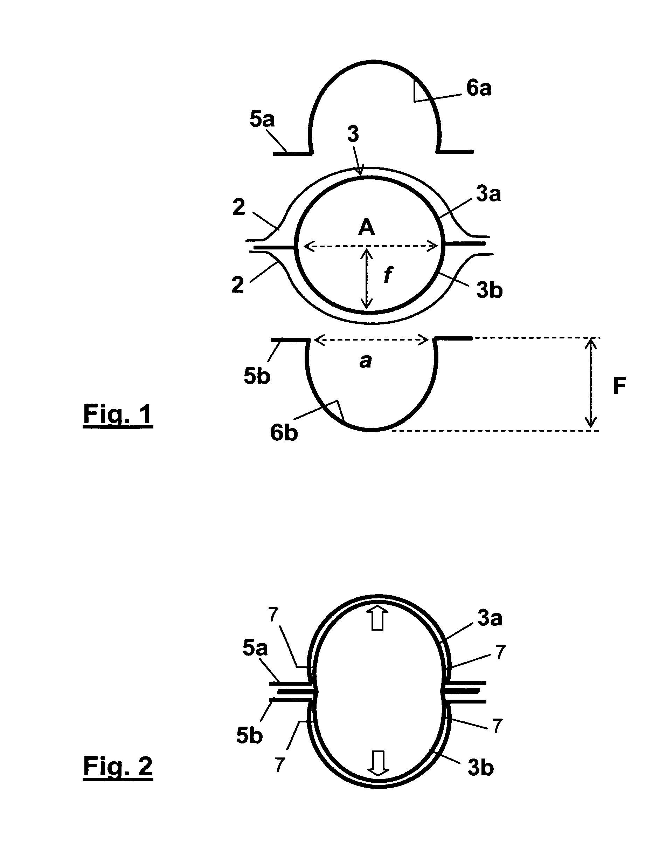

Figures 1 and 2 show plan and schematic views of the support body 3 of a spout. Two opposing, smooth, convex sealing surfaces 3a and 3b with a general semi-circular or round arch shape, i.e., semicylindrical, are distinguished in the support body 3.

Shown in Figure 1, opposite the sealing surfaces 3a and 3b, are the side walls 2 of the pack in the production process, which side walls 2 must be applied under pressure against the respective sealing surfaces 3a and 3b by the thrust of the clamps 5a and 5b, and specifically by their corresponding operative surfaces 6a and 6b. In the example of Figures 1 and 2, the operative surface 6a and 6b of each of the clamps 5a and 5b is formed by an arched concavity, its span a being smaller than span A of the arches of the sealing surfaces 3a and 3b. More specifically, the concavities are of a general keyhole arch shape, the degree of measurement of their central angle being greater than 180°. It can also be seen in the figures that the height Fof the concavities is greater than the height *f* of the arch of the sealing surfaces 3a and 3b.

In Figure 2, the moment in which the clamps 5a and 5b exert pressure against the support body of the spout 3 and apply the side walls 2 against the respective sealing surfaces 3a and 3b, it is seen that each clamp 5a and 5b simultaneously exerts pressure on the two ends 7 of the arch of the corresponding sealing surface 3a and 3b causing, due to the elastic reaction of the support body 3 of the spout, a deformation in the sealing surfaces 3a and 3b such that its vertexes are oriented in the direction indicated by the arrows of Figure 2, and such that the entire sealing surface 3a and 3b contacts against the concavity of the respective operative surface 6a and 6b of the clamps 5a and 5b, with the interposition of the corresponding side wall 2 of the pack.

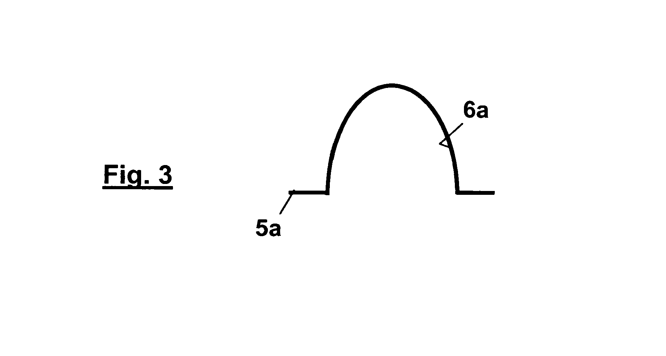

This effect can also be achieved, especially for support bodies 3 the sealing surfaces of which have a general semi-circular or round arch shape, by means of a clamp comprising an operative surface 6a provided with a curved concavity with a general stilted arch shape, the height of which is greater than its half-span, without it being a keyhole arch, as depicted in Figure 3 .

## Claims

1. A process for the heat weld sealing of the end edges of two side walls (2) of a flexible container pack to a support body (3) of a spout interposed between the mentioned side walls, said support body having two opposing, convex, flexible sealing surfaces (3a, 3b) with a general arch shape, the process comprising the operation of applying under pressure each of the side walls of the pack against a respective sealing surface of the support body of the spout, exerting pressure by means of the operative surface (6a, 6b) of a corresponding clamp (5a, 5b) on the side walls of the pack, and of supplying heat to cause the bonding of the mentioned side walls and the sealing surfaces by melting the materials that form them, the process being **characterized in that** the operative surface of each of the clamps is formed by an arched concavity, its span (a) being smaller than the span (A) of the arch of the respective sealing surface, all such that each clamp simultaneously exerts pressure on the two ends (7) of the arch of the corresponding sealing surface causing, due to the elastic reaction of the support body of the spout, a deformation in the sealing surface which causes a bulging effect, such as an increase of its height and a reduction of its span, such that the entire sealing surface contacts against the concavity of the operative surface of the clamp, with the interposition of the corresponding side wall of the pack.

2. The process according to claim 1, **characterized in that** the sealing surfaces (3a, 3b) are provided with a general semi-circular or round arch shape, and **in that** the shape of the arched concavity of the operative surfaces (6a, 6b) of the clamps (5a, 5b) is one of a general keyhole or horseshoe arch shape.

3. The process according to claim 1, **characterized in that** the sealing surfaces (3a, 3b) are provided with a general semi-circular or round arch shape, and **in that** the shape of the arched concavity of the operative surfaces (6a, 6b) of the clamps (5a, 5b) is of a general stilted arch shape, the height of which is greater than its half-span.

4. The process according to any one of the previous claims, **characterized in that** the shape of the arched concavity of the operative surfaces (6a, 6b) of the clamps (5a, 5b) is a general arch shape the height (F) of which is greater than the height (f) of the arch of the sealing surface.

5. A clamp (5a, 5b) for the heat weld sealing of the end edge of a side wall of a flexible container pack to the flexible and convex sealing surface of a support body of a spout, the clamp being especially suitable for sealing surfaces with a general semi-circular or round arch shape, **characterized in that** the clamp comprises an operative surface (6a, 6b) formed by a curved concavity with one of a general keyhole arch shape or a general stilted arch shape, the height of which is greater than its half-span.

## Patentansprüche

1. Verfahren zum Versiegeln durch Wärmeschweißen der Endränder von zwei Seitenwänden (2) eines flexiblen Verpackungsbehälters mit einem Trägerkörper (3) einer Gießtülle, welcher zwischen den genannten Seitenwänden gestellt ist, wobei der genannte Trägerkörper zwei entgegengesetzte, konvexe, flexible Versiegelungsflächen (3a, 3b) mit einer allgemeinen Bogenform aufweist, wobei das Verfahren den Vorgang der Anwendung unter Druck von jeder der Seitenwänden des Behälters gegen eine jeweilige Versiegelungsfläche des Trägerkörpers der Gießtülle umfasst, mit Ausübung eines Drucks durch die operative Fläche (6a, 6b) einer entsprechenden Klemme (5a, 5b) auf die Seitenwände des Behälters, und der Zuführung von Wärme, um die Verbindung der genannten Seitenwände und der Versiegelungsflächen durch Schmelzen der Materialien, welche diese bilden, zu bewirken, wobei das Verfahren **dadurch gekennzeichnet ist, dass** die operative Fläche von jeder der Klemmen durch eine bogenförmige Konkavität gebildet wird, wobei ihre lichte Weite (a) kleiner als die lichte Weite (A) des Bogens der jeweiligen Versiegelungsfläche ist, so dass jede Klemme gleichzeitig Druck auf beiden Enden (7) des Bogens der entsprechenden Versiegelungsfläche ausübt, wobei, durch die elastische Reaktion des Trägerkörpers der Gießtülle, eine Verformung in der Versiegelungsfläche bewirkt wird, welche einen Wölbungseffekt bewirkt, wie eine Zunahme ihrer Höhe und eine Verringerung ihrer lichten Weite, so dass die ganze Versiegelungsfläche gegen die Konkavität der operativen Fläche der Klemme in Kontakt kommt, mit der Zwischenstellung der entsprechenden Seitenwand des Behälters.

2. Verfahren nach Anspruch 1, **dadurch gekennzeichnet, dass** die Versiegelungsflächen (3a, 3b) mit einer allgemeinen, halbkreisförmigen oder runden Bogenform versehen werden, und dass die Form der bogenförmigen Konkavität der operativen Flächen (6a, 6b) der Klemmen (5a, 5b) eine aus einer allgemeinen Bogenform als Schlüsselloch oder Hufeisen ist.

3. Verfahren nach Anspruch 1, **dadurch gekennzeichnet, dass** die Versiegelungsflächen (3a, 3b) mit einer allgemeinen, halbkreisförmigen oder runden Bogenform versehen werden, und dass die Form der bogenförmigen Konkavität der operativen Flächen (6a, 6b) der Klemmen (5a, 5b) eine aus einer allgemeinen, überhöhten Bogenform ist, wobei ihre Höhe größer als ihre halbe lichte Weite ist.

4. Verfahren nach einem der vorhergehenden Ansprüche, **dadurch gekennzeichnet, dass** die Form der bogenförmigen Konkavität der operativen Flächen (6a, 6b) der Klemmen (5a, 5b) eine allgemeine Bogenform ist, wobei ihre Höhe (F) größer als die Höhe (f) des Bogens der Versiegelungsfläche ist.

5. Klemme (5a, 5b) zum Versiegeln durch Wärmeschweißen des Endrands einer Seitenwand eines flexiblen Verpackungsbehälters mit der flexiblen und konvexen Versiegelungsfläche eines Trägerkörpers einer Gießtülle, wobei die Klemme besonders dafür geeignet ist, Flächen mit einer allgemeinen halbkreisförmigen oder runden Bogenform zu verschweißen, **dadurch gekennzeichnet, dass** die Klemme eine operative Fläche (6a, 6b) umfasst, welche durch eine kurvenförmige Konkavität mit einer aus einer allgemeinen Bogenform als Schlüsselloch oder einer allgemeinen, überhöhten Bogenform gebildet ist, wobei ihre Höhe größer als ihre halbe lichte Weite ist.

## Revendications

1. Procédé pour le scellage par thermosoudure des bords terminaux de deux parois latérales (2) d'un emballage souple sur un corps de support (3) d'une embouchure interposé entre lesdites parois latérales, ledit corps de support ayant deux surfaces de scellage convexes, souples et opposées (3a, 3b) avec une forme d'arc générale, le procédé comprenant l'opération d'appliquer sous pression chacune des parois latérales de l'emballage contre une surface de scellage respective du corps de support de l'embouchure, exerçant une pression au moyen de la surface de travail (6a, 6b) d'une mâchoire correspondante (5a, 5b) sur les parois latérales de l'emballage, et d'approvisionner de la chaleur pour causer le collage desdites parois latérales et des surfaces de scellage en fondant les matériaux qui les constituent, le procédé étant **caractérisé en ce que** la surface de travail de chacune des mâchoires est formée par une concavité arquée, sa portée (a) étant plus petite que la portée (A) de l'arc de la surface de scellage respective, de façon à ce que chaque mâchoire exerce simultanément de la pression sur les deux extrémités (7) de l'arc the la surface de scellage correspondante causant, à cause de la réaction élastique du corps de support de l'embouchure, une déformation dans la surface de scellage qui cause un effet de gonflement, tel qu'une augmentation de sa hauteur et une réduction de sa portée, de façon à ce que la surface de scellage entière entre en contact avec la concavité de la surface de travail de la mâchoire, avec l'interposition de la paroi latérale correspondant de l'emballage.

2. Procédé selon la revendication 1, **caractérisé en ce que** les surfaces de scellage (3a, 3b) sont pourvues d'une forme d'arc semi-circulaire ou ronde générale et **en ce que** la forme de la concavité arquée des surfaces de travail (6a, 6b) des mâchoires (5a, 5b) est d'une forme d'arc de trou de serrure ou de fer à cheval générale.

3. Procédé selon la revendication 1, **caractérisé en ce que** les surfaces de scellage (3a, 3b) sont pourvues d'une forme d'arc semi-circulaire ou ronde générale et **en ce que** la forme de la concavité arquée des surfaces de travail (6a, 6b) des mâchoires (5a, 5b) est d'une forme d'arc surhaussé générale, dont la hauteur est supérieure à sa demi-portée.

4. Procédé selon l'une quelconque des revendications précédentes, **caractérisé en ce que** la forme de la concavité arquée des surfaces de travail (6a, 6b) des mâchoires (5a, 5b) est une forme d'arc générale dont la hauteur (F) est supérieure à la hauteur (f) de l'arc de la surface de scellage.

5. Mâchoire (5a, 5b) pour le scellage par thermosoudure du bord terminal d'une paroi latérale d'un emballage souple sur la surface souple et convexe d'un corps de support d'une embouchure, la mâchoire étant spécialement adaptée pour sceller des surfaces avec une forme d'arc semi-circulaire ou ronde générale, **caractérisée en ce que** la mâchoire comprend un surface de travail (6a, 6b) formée par une concavité courbée avec une d'une forme d'arc de trou de serrure générale ou une forme d'arc surhaussé générale, dont la hauteur est supérieure à sa demi-portée.
